# EUROPEAN PATENT APPLICATION

(11) **EP 4 723 747 A1**
(43) Date of publication of application: **08.04.2026**
(21) Application number: 23938819.2
(22) Date of filing: 30.05.2023
(51) Int. Cl.: H04W 52/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Mewburn Ellis LLP
(86) International application number: PCT/CN2023/097260
(87) International publication number: WO 2024/243825

(57) **Abstract**

A method for wireless communication and a communication device are provided. The method includes the following. A first device receives or sends first information, where the first information indicates that the first device is to perform communication based on a target communication module among multiple communication modules, and the multiple communication modules respectively have different communication capabilities and/or power consumption. The method for wireless communication is provided in embodiments of the present disclosure. In this method, the target communication module to be used by the first device can be determined between the first device and a second device through the first information. In other words, the introduction of the first information enables the first device to communicate with the second device based on communication modules with different power consumption (e.g., a reduced capability (RedCap) communication module). Compared with a solution in which the first device can only communicate with the second device based on an enhanced mobile broadband (eMBB) communication module, this method is conducive to increasing the power consumption saved by the first device.

## Description

### TECHNICAL FIELD

This disclosure relates to the field of communication technology, in particular to a method for wireless communication and a communication device.

### BACKGROUND

Power-saving technical solutions currently defined in communication protocols are designed only for a first device with a single communication module, without considering the applicability to a first device with multiple communication modules, thereby limiting the amount of power consumption (or energy) saved by the first device.

### SUMMARY

A method for wireless communication and a communication device are provided in the present disclosure. The following will introduce various aspects involved in the present disclosure.

In a first aspect, a method for wireless communication is provided. The method includes the following. A first device receives or sends first information, where the first information indicates that the first device is to perform communication based on a target communication module among multiple communication modules, and the multiple communication modules respectively have different communication capabilities and/or power consumption.

In a second aspect, a method for wireless communication is provided. The method includes the following. A second device receives or sends first information, where the first information indicates that a first device is to perform communication based on a target communication module among multiple communication modules, and the multiple communication modules respectively have different communication capabilities and/or power consumption.

In a third aspect, a communication device is provided. The communication device is a first device and includes a communication unit. The communication unit is configured to receive or send first information, where the first information indicates that the first device is to perform communication based on a target communication module among multiple communication modules, and the multiple communication modules respectively have different communication capabilities and/or power consumption.

In a fourth aspect, a communication device is provided. The communication device is a second device and includes a communication unit. The communication unit is configured to receive or send first information, where the first information indicates that a first device is to perform communication based on a target communication module among multiple communication modules, and the multiple communication modules respectively have different communication capabilities and/or power consumption.

In a fifth aspect, a communication device is provided. The communication device includes a processor, a memory, and a communication interface. The memory is configured to store one or more computer programs. The processor is configured to invoke the computer programs stored in the memory, to cause the terminal device to perform some or all operations in the method in various aspects mentioned above.

In a sixth aspect, a communication system is provided in embodiments of the present disclosure. The communication system includes the first device and/or the second device. In another possible design, the system may further include other devices that interact with the terminal device or the network device in the solutions provided in embodiments of the present disclosure.

In a seventh aspect, a computer-readable storage medium is provided in embodiments of the present disclosure. The computer-readable storage medium is configured to store a computer program that causes a communication device (e.g., a terminal device or a network device) to perform some or all operations in the method in various aspects mentioned above.

In an eighth aspect, a computer program product is provided in embodiments of the present disclosure. The computer program product includes a non-transitory computer-readable storage medium storing a computer program. The computer program is operable with a communication device (e.g., a terminal device or a network device) to perform some or all operations in the method in various aspects mentioned above. In some embodiments, the computer program product may be a software installation package.

In a ninth aspect, a chip is provided in embodiments of the present disclosure. The chip includes a memory and a processor. The processor can be configured to invoke and execute a computer program stored in the memory, to implement some or all operations in the method in various aspects mentioned above.

The method for wireless communication is provided in embodiments of the present disclosure. In this method, the target communication module to be used by the first device can be determined between the first device and the second device through the first information. In other words, the introduction of the first information enables the first device to communicate with the second device based on communication modules with different power consumption (e.g., a reduced capability (RedCap) communication module). Compared with a solution in which the first device can only communicate with the second device based on an enhanced mobile broadband (eMBB) communication module, this method is conducive to increasing the power consumption saved by the first device.

### BRIEF DESCRIPTION OF THE DRAWINGS

FIG. 1 illustrates a wireless communication system 100 to which embodiments of the present disclosure are applicable.
FIG. 2 is a schematic diagram of a first device to which embodiments of the present disclosure are applicable.
FIG. 3 is a schematic flowchart illustrating a method for wireless communication provided in embodiments of the present disclosure.
FIG. 4 is a schematic flowchart illustrating a method for wireless communication provided in another embodiment of the present disclosure.
FIG. 5 is a schematic flowchart illustrating a method for wireless communication provided in another embodiment of the present disclosure.
FIG. 6 is a schematic flowchart illustrating a method for wireless communication provided in another embodiment of the present disclosure.
FIG. 7 is a schematic flowchart illustrating a method for wireless communication provided in another embodiment of the present disclosure.
FIG. 8 is a schematic diagram of a communication device provided in embodiments of the present disclosure.
FIG. 9 is a schematic diagram of a communication device provided in another embodiment of the present disclosure.
FIG. 10 is a schematic structural diagram of a communication apparatus provided in embodiments of the present disclosure.

### DETAILED DESCRIPTION

The following will describe technical solutions of the present disclosure with reference to accompanying drawings.

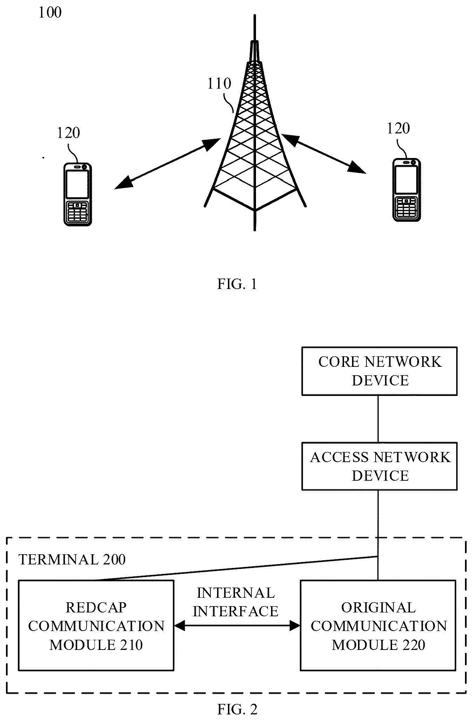

FIG. 1 illustrates a wireless communication system 100 to which embodiments of the present disclosure are applicable. The wireless communication system 100 may include a network device 110 and a terminal device 120. The network device 110 may be a device that can communicate with the terminal device 120. The network device 110 can provide a communication coverage for a specific geographical area and communicate with terminal devices 120 in the coverage area.

FIG. 1 exemplarily illustrates one network device and two terminal devices. Optionally, the wireless communication system 100 may include multiple network devices, and there may be other numbers (quantities) of terminal devices in a coverage area of each of the multiple network devices, which is not limited in embodiments of the present disclosure.

Optionally, the wireless communication system 100 may further include other network entities such as a network controller, a mobility management entity (MME), etc., which is not limited in embodiments of the present embodiment.

It may be understood that, the technical solutions of embodiments of the present disclosure may be applicable to various communication systems, such as: a 5th generation (5G) system or a new radio (NR) system, a long-term evolution (LTE) system, an LTE frequency division duplex (FDD) system, an LTE time division duplex (TDD) system, etc. The technical solutions provided in the present disclosure may also be applicable to future communication systems, such as a sixth-generation (6G) mobile communication system, a satellite communication system, etc.

The terminal device in embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless CN network element, a user agent, a user device, etc. The terminal device in embodiments of the present disclosure may be a device that provides voice and/or data connectivity to a user and is capable of connecting people, objects, and machines, such as a handheld device with a wireless connection function, a vehicle-in device, etc. The terminal device in embodiments of the present disclosure may be a mobile phone, a pad, a laptop computer, a tablet computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the UE may be used to act as a base station. For example, the UE may act as a scheduling entity that provides a sidelink signal between UEs in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The network device in embodiments of the present disclosure may be a device for communicating with the terminal device, and the network device may also be referred to as an access network (AN) device or a radio access network (RAN) device, for example, the network device may be a base station. The network device in embodiments of the present disclosure may refer to an RAN node (or device) that connects the terminal device to a wireless network. The base station may broadly cover various names in the following, or may be interchangeable with one of the following names, for example, an NodeB, an evolved NodeB (eNB), a next generation NodeB (gNB), a relay station, an access point, a transmission reception point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof. The base station may also refer to a communication module, a modem, or a chip that is configured inside the device or the apparatus. The base station may also be a mobile switching center, a device acting as a base station in D2D communication, V2X communication, or machine-to-machine (M2M) communication, a network-side device in a 6G network, a device acting as a base station in a future communication system, etc. The base station may support networks of the same or different access technologies, and there is no limitation on specific technology and specific device form adopted by the network device in embodiments of the present disclosure.

In some embodiments, the base station may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another network device.

In some deployments, the network device may be a CU or a DU, the network device may include a CU and a DU, or the network device may also include an AAU.

The network device may be deployed on land, which includes indoor or outdoor, handheld, wearable, or in-vehicle, may be deployed on water, or may be deployed in the air (such as airplanes, balloons, satellites, etc.). The scenarios in which the network device is located are not limited in embodiments of the present disclosure.

It may be understood that, all or some of functions of the communication device in the present disclosure may also be implemented by software functions running on hardware, or by virtualization functions implemented on a platform (e.g., a cloud platform).

### Discontinuous reception (DRX)

In order to reduce power consumption of a terminal, a DRX mechanism is introduced in both an LTE system and an NR system, such that the terminal is enabled to enter a DRX state without turning on a receiver all the time in the case of no data reception, so as to achieve power saving. The DRX mechanism includes configuring a DRX cycle for a terminal in a radio resource control (RRC) connected state, and one DRX cycle consists of "on duration" and "opportunity for DRX". During on duration, the terminal monitors and receives downlink channels including a physical downlink control channel (PDCCH) and signals. During opportunity for DRX, the terminal does not receive downlink channels such as PDCCH and signals, to reduce the power consumption.

In the evolution of a 5G system, higher requirements are put forward for the power saving of the terminal. For the existing DRX mechanism, in each on duration, the terminal needs to constantly detect PDCCH to determine whether a network device schedules data to be sent to the terminal. However, for most terminals, there may be no need to receive data transmission for a long time, but the terminals still need to keep waking up regularly to monitor possible downlink transmission. For such terminals, there is space for further optimization of power saving of the terminals.

Therefore, in the R16 standard of 5G, a power-saving signal (also referred to as "wake-up signal (WUS)") is introduced to achieve further power saving. The power-saving signal may be used in combination with the DRX mechanism, as illustrated in FIG. 2. In this way, before entering the on duration of the DRX, the terminal can first determine, based on an indication of the power-saving signal, whether there is a need to receive data during the on duration of the DRX. When there is data transmission for the terminal during a DRX cycle, the power-saving signal "wakes up" the terminal, and correspondingly, the terminal performs PDCCH monitoring during the on duration of the DRX. On the contrary, when there is no data transmission for the terminal during a DRX cycle, the power-saving signal does not "wake up" the terminal, and correspondingly, the terminal does not need to perform PDCCH monitoring during the on duration of the DRX. In the DRX mechanism combined with the power-saving signal, in a DRX cycle, if the power-saving signal does not wake up the terminal, the terminal does not need to perform PDCCH monitoring even in the on duration of the DRX, thereby realizing power saving.

### Reduced capability (RedCap) terminal

The power-saving technologies can also be used by a RedCap terminal to a certain extent. The RedCap terminal is a terminal device newly introduced in some communication protocols. The RedCap terminal can be understood as a simplified version of a 5G terminal. In daily life, the RedCap terminal may be used for IoT products related to mobile phones, such as watches or smart bands, etc. In industry, the RedCap terminal may also be used for sensors or servo mechanisms. In smart cities, the RedCap terminal may be used for cameras, etc.

To reduce the power consumption of the terminal device, the RedCap terminal typically does not support relatively complex technical features in NR in some scenarios, such as carrier aggregation (CA), dual connectivity (DC), multiple-input multiple-output (MIMO), or a high-order modulation scheme. In other scenarios, a bandwidth supported by the RedCap terminal is also relatively narrow. For example, in FR1 frequency band, the maximum bandwidth supported by the RedCap terminal does not exceed 20 MHz. For another example, in FR2 frequency band, the maximum bandwidth supported by the RedCap terminal does not exceed 100 MHz.

Generally, the RedCap terminal is a standalone terminal device. Currently, to improve scheduling efficiency, it has been specified in communication protocols that when a terminal device is scheduled, it is necessary to know whether the scheduled terminal device is a RedCap terminal. In some embodiments, when a RedCap UE accesses a network device, the RedCap UE can indicate to the network device that the RedCap UE is a RedCap terminal. For example, in a random access channel (RACH) process, the RedCap terminal may carry indication information in either message 1 or message 3, indicating that it is a RedCap terminal.

In some scenarios, to further reduce the power consumption of the RedCap terminal, some power-saving solutions specifically designed for the RedCap terminal are introduced in the communication protocols. For example, ultra-long extended discontinuous reception (eDRX) (greater than 10.24 seconds) is introduced in R18. In addition, based on the description of the RedCap terminal, due to its simplified hardware configuration, the RedCap terminal requires less power than a standard terminal using the same power-saving technology. The standard terminal may be, for example, an intelligent terminal and/or an enhanced mobile broadband (eMBB) terminal.

Therefore, the applicant proposes integrating a communication module (also referred to as "RedCap communication module" or "simplified communication module") 210 in a RedCap terminal into a standard terminal 200, as illustrated in FIG. 2. The terminal 200 can prioritize the RedCap communication module 210 for communication, and wake up an original communication module 220 inside the standard terminal at specific times. For example, the standard terminal is an eMBB terminal, and the original communication module inside the standard terminal can be referred to as "eMBB communication module". For example, the standard terminal is an intelligent terminal, and the original communication module inside the standard terminal can be referred to as "intelligent communication module".

For another thing, from a perspective of services, the standard terminal (such as an eMBB terminal) also has some services suitable for the RedCap terminal. For example, after various applications (apps) are activated, the standard terminal generally needs to send heart-beating signals to the apps to maintain the activity of the apps. In this way, when data communication is required for the apps, the apps can quickly process data, without the need for a cold start. If the original communication module is used to process the heart-beating signals, the power consumption of the terminal device will be relatively large. Even if some power-saving technologies are used, since the original communication module supports relatively complex technical features in terms of hardware, the power consumed by the original communication module is still larger than that consumed by the RedCap communication module.

In some embodiments, the RedCap communication module can be used to wake up the original communication module inside the terminal. For example, the RedCap communication module can transmit a wake-up command to the original communication module inside the terminal, to wake up the original communication module inside the terminal. The wake-up command may be transmitted through an internal interface.

In some embodiments, the network device (e.g., a core network (CN) device or an AN device) can communicate with the RedCap communication module. For example, the network device can indicate the RedCap communication module to wake up the original communication module. Certainly, in embodiments of the present disclosure, the network device can communicate with the original communication module.

It may be noted that, the communication module is not limited in embodiments of the present disclosure. In some embodiments, the communication module may include some or all components for receiving signals, such as a receiver. In some other embodiments, the communication module may include some or all components for transmitting signals, such as a transmitter.

In addition, for ease of explanation, the above description is given with an example of communication between the terminal device and the network device, but the solutions in embodiments of the present disclosure are not limited to this example. The terminal device can be used as an example of a first device, where the first device may also be a station (STA). The network device can be used as an example of a second device, where the second device may be an access point (AP). The following is described from the perspective of the first device and the second device.

The power-saving technical solutions currently defined in the communication protocols are designed only for a first device with a single communication module, without considering the applicability to a first device with multiple communication modules, thereby limiting the amount of power consumption (or energy) reduced by the first device.

For example, a first device has both a RedCap communication module and an eMBB communication module, and a second device communicates with the first device as if the first device only has an eMBB communication module. In this case, the first device can only communicate with the second device based on the eMBB communication module. However, the power required for the eMBB communication module is greater than that required for the RedCap communication module. Therefore, even with the power-saving technologies, the power saved by the first device is limited.

Therefore, to address the issues, a method for wireless communication is provided in embodiments of the present disclosure. In this method, a target communication module to be used by the first device can be determined between the first device and the second device through first information. In other words, the introduction of the first information enables the first device to communicate with the second device based on communication modules with different power consumption (e.g., the RedCap communication module). Compared with a solution in which the first device can only communicate with the second device based on the eMBB communication module, this method is conducive to increasing the power consumption saved by the first device.

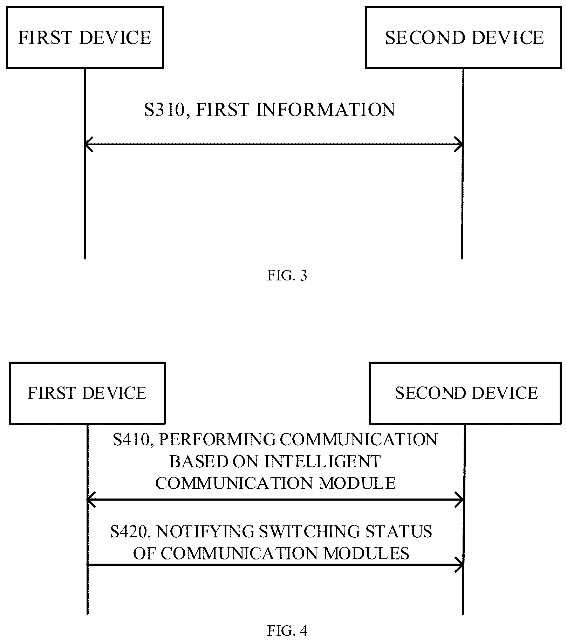

For ease of understanding, the method for wireless communication provided in embodiments of the present disclosure is described below in conjunction with FIG. 3. FIG. 3 is a schematic flowchart illustrating a method for wireless communication provided in embodiments of the present disclosure. The method illustrated in FIG. 3 includes operations at S310.

At S310, a first device receives or sends first information. The first device may be, for example, the terminal device.

In some embodiments, the first information indicates that the first device is to perform communication based on a target communication module among multiple communication modules, and the multiple communication modules respectively have different communication capabilities and/or power consumption. For example, the multiple communication modules may include one or more of an eMBB communication module, a RedCap communication module, or an intelligent communication module.

The communication capabilities can indicate whether the first device supports broadband communication services. Taking the first device including an eMBB communication module as an example, the communication capabilities of the first device indicate that the first device supports broadband communication services. Taking the first device including a RedCap communication module as an example, the communication capabilities of the first device indicate that the first device does not support broadband communication services.

The communication capabilities indicate whether the first device supports narrowband communication services. Taking the first device including an eMBB communication module as an example, the communication capabilities of the first device indicate that the first device does not support narrowband communication services. Taking the first device including a RedCap communication module as an example, the communication capabilities of the first device indicate that the first device supports narrowband communication services.

In some other embodiments, the first information can indicate that the first device is to perform communication based on the target communication module by indicating that the first device is to switch between the multiple communication modules. Assuming the multiple communication modules include a first communication module and a second communication module, then the first information indicates that the first device is to switch from the first communication module to the second communication module, or the first information indicates that the first device is to switch from the second communication module to the first communication module. Communication capability corresponding to the first communication module is higher than communication capability corresponding to the second communication module, and/or power consumption corresponding to the first communication module is greater than power consumption corresponding to the second communication module.

In some embodiments, the switching between the first communication module and the second communication module may be determined based on a service type of a service(s) to be transmitted, and a different service type can correspond to one communication module. For example, if the service type of the service(s) to be transmitted is a first service type, the first information indicates a switching from the second communication module to the first communication module, where the first service type can be associated with the first communication module, and the first service type can include, for example, a live streaming service, an online video call service, etc. For another example, if the service type of the service(s) to be transmitted is a second service type, the first device can switch from the first communication module to the second communication module, where the second service type can be associated with the second communication module, and the second service type can include, for example, a web browsing service.

In some embodiments, the switching between the first communication module and the second communication module may be determined based on a data volume of the service(s) to be transmitted. For example, for a service with a relatively large data volume, the first information indicates a switching from the second communication module to the first communication module. For another example, for a service with a relatively small data volume, the first information indicates a switching from the first communication module to the second communication module.

In embodiments of the present disclosure, the method for calculating the data volume is not limited. For example, the service with the relatively large data volume may refer to a service with a data volume greater than a first threshold per unit time. For another example, the service with the relatively small data volume may refer to a service with a data volume less than a second threshold per unit time. The first threshold may be the same as the second threshold, or the first threshold may be greater than the second threshold.

Certainly, in embodiments of the present disclosure, the switching between the first communication module and the second communication module may be determined based on resumption and suspension of a target transmission service. For example, if a target service type is associated with the first communication module and the data transmission of the target service type is suspended, the first information can indicate a switching from the first communication module to the second communication module. For another example, if the target service type is associated with the first communication module and the data transmission of the target service type is resumed, the first information can indicate a switching from the second communication module to the first communication module. For another example, if the target service type is associated with the second communication module and the data transmission of the target service type is suspended, the first information can indicate a switching from the second communication module to the first communication module. For another example, if the target service type is associated with the second communication module and the data transmission of the target service type is resumed, the first information can indicate a switching from the second communication module to the first communication module.

In embodiments of the present disclosure, the conditions for determining the switching between the communication modules may be used independently or may be used in combination with each other, to improve the rationality of the switching between the communication modules. For example, in the case where the first service type is associated with the first communication module, if the first service type has a relatively large data volume, the first information can indicate a switching from the second communication module to the second communication module. For another example, in the case where the first service type is associated with the first communication module, if the first service type has a relatively small data volume, the first information can indicate a switching from the first communication module to the second communication module for communication.

The above describes the first information in embodiments of the present disclosure. The following will describe a manner of sending the first information in embodiments of the present disclosure. In some embodiments, the first information may be sent by the first device to the second device, or in other words, the first information may be triggered by the first device. For example, when the first device is a terminal device and the second device is a network device, the first information may be sent by the terminal device to the network device. Detailed descriptions will be given below in conjunction with Embodiment 1.

In some other embodiments, the first information may be sent by the second device to the first device, or in other words, the first information may be triggered by the second device. For example, when the first device is a terminal device and the second device is a network device, the first information may be sent by the network device to the terminal device. Detailed descriptions will be given below in conjunction with Embodiment 2.

### Embodiment 1

In embodiments of the present disclosure, the first information can indicate, in an explicit manner, that the first device is to perform communication based on the target communication module. In other words, the first information indicates that the first device is to perform communication based on the target communication module. In some embodiments, the first information may be understood as a notification message for notifying the second device that the first device is to perform communication based on the target communication module. For example, the first information may carry indication information, and the indication information indicates, in the explicit manner, that the first device is to perform communication based on the target communication module.

In some other embodiments, the first information may also be understood as a request, that is, the first information is used for requesting communication with the second device based on the target communication module. In this case, the first information can indicate, via the request, that the first device is to communicate with the second device based on the target communication module.

In some other embodiments, the first information may also be understood as a scheduling request, that is, the first information is used for requesting to schedule a target wireless resource(s) associated with the target communication module for the first device. In this case, the first information can indicate, via the scheduling request, that the first device is to communicate with the second device based on the target communication module.

In some embodiments, the scheduling request may be sent via a target wireless resource(s) (e.g., a target bandwidth part (BWP) associated with the target communication module). Certainly, in embodiments of the present disclosure, the scheduling request may also be sent via other wireless resources, which is not limited in embodiments of the present disclosure.

In embodiments of the present disclosure, the target communication module may be one of the multiple communication modules. For example, the target communication module may be an eMBB communication module. For another example, the target communication module may be a RedCap communication module. For another example, the target communication module may be an intelligent communication module.

In addition, in embodiments of the present disclosure, there is no limitation on a manner of carrying the first information. For example, the first information may be carried in one or more of an RRC message, a medium access control control element (MAC CE), or physical layer (PHY) signaling.

It may be noted that, in embodiments of the present disclosure, there is no limitation on an order of a timing for sending the first information and a timing for switching to the target communication module. In some embodiments, the timing for sending the first information may be later than the timing for switching to the target communication module, that is, before the operations at S310 are performed, the method further includes the following. The first device switches to the target communication module. In some other embodiments, the timing for sending the first information may be earlier than the timing for switching to the target communication module, that is, the method further includes the following. After the operations at S310 are performed, the first device switches to the target communication module.

In some scenarios, after the first information is received by the second device, the second device can send second information to the first device, where the second information is used for confirming that the first device is to switch to the target communication module, or in other words, the second information is an acknowledgment (ACK) message for the first information, indicating that the second device confirms that the first device is to switch to the target communication module. In other words, the method further includes the following. In response to the first device sending the first information, the first device receives the second information sent by the second device, which is conducive to unifying the understanding between the first device and the second device and improving the success rate of communication between the first device and the second device. Certainly, in embodiments of the present disclosure, after the first information is received by the second device, the second device may not send the second information to the first device, to reduce the overhead of sending the second information.

In embodiments of the present disclosure, the second information may indicate and confirm, in an explicit manner or in an implicit manner, that the first device is to switch to the target communication module. The two manners are introduced below, respectively.

Taking the indication of the second information in the implicit manner as an example, in some embodiments, the implicit manner means that the second device confirms (or acknowledges) that the first device is to switch to the target communication module by scheduling, via the second information, the first device to the target wireless resource associated with the target communication module for communication. Alternatively, the second device can confirm that the first device is to switch to the target communication module by scheduling, via the second information, the first device to the target wireless resource as an ACK.

In embodiments of the present disclosure, the target radio resource is not specifically limited. In some embodiments, the target radio resource may be a frequency-domain resource. For example, the target radio resource may include a target bandwidth. For another example, the target radio resource may include a target BWP. In some other embodiments, the target radio resource may be a time-domain resource or a code-domain resource.

Taking the target wireless resource being the target bandwidth as an example, the target bandwidth associated with the target communication module can be replaced with a target bandwidth corresponding to the target communication module. In some embodiments, the target bandwidth may be a bandwidth dedicated for the target communication module. Taking the target bandwidth being the target BWP as an example, the target bandwidth may be a BWP dedicated for the target communication module. Certainly, in embodiments of the present disclosure, the target bandwidth may also be a bandwidth that can be used by the target communication module but not the bandwidth dedicated for the target communication module. In other words, the target bandwidth may also have other usages.

Certainly, in embodiments of the present disclosure, the second information may also indicate and confirm, in other implicit manners, that the first device is to switch to the target communication module. In some embodiments, the second device can confirm that the first device is to switch from the target communication module to another communication module by the second information being sent to the first device to schedule the first device away from the target bandwidth associated with the target communication module.

In embodiments of the present disclosure, there is no limitation on an association manner between a communication module(s) and a wireless resource(s). In some embodiments, a different communication module among the multiple communication modules may correspond to a different wireless resource. In some other embodiments, a certain communication module among the multiple communication modules may correspond to a dedicated wireless resource, and another communication module may correspond to another wireless resource other than the dedicated wireless resource. For example, only a RedCap communication module can correspond to a dedicated BWP, and another communication module other than the RedCap communication module can correspond to another BWP other than the dedicated BWP. In other words, other communication modules may not respectively have dedicated BWPs.

In some embodiments, the method further includes the following. In response to receiving the second information, the first device can be scheduled to the target wireless resource, and communicate with the second device based on the target communication module. Certainly, in embodiments of the present disclosure, the first device can communicate with other devices using the target communication module on the target wireless resource.

It may be noted that, in embodiments of the present disclosure, there is no limitation on an order of a timing for the second information being sent and a timing for the target communication module being switched to. In some embodiments, the timing for the second information being sent may be later than the timing for the target communication module being switched to. For example, the first device may switch to the target communication module after sending the first information and before receiving the second information. For another example, the first device may switch to the target communication module before sending the first information (i.e., before receiving the second information). In other embodiments, the timing for the second information being sent may be earlier than the timing for the target communication module being switched to. In other words, in response to receiving the second information, the first device switches to the target communication module.

For ease of understanding, the method for wireless communication provided in embodiments of the present disclosure is described below in conjunction with Example 1 and Example 2. Example 1 and Example 2 are described with an example that the first communication module is an intelligent communication module and the second communication module is a RedCap communication module.

Example 1: FIG. 4 is a schematic flowchart illustrating a method for wireless communication provided in embodiments of the present disclosure. The method illustrated in FIG. 4 can include operations at S410 to S420.

At S410, a first device communicates with a second device based on an intelligent communication module.

For example, live streaming service communication is established between the first device and the second device, and the first device performs data interaction for live streaming with the second device based on the intelligent communication module.

At S420, if the first device suspends (or terminates) data transmission for live streaming services and keeps a live streaming app in a running state, the first device can notify the second device of a switching status of communication modules inside the first device.

By way of example, the following describes a manner for the first device to notify the second device in combination with Manner 1 to Manner 3. It may be noted that, in embodiments of the present disclosure, the manner of notifying the second device is not limited to the following three manners.

Manner 1, the first device sends first information to the second device, to request to switch from the intelligent communication module to a RedCap communication module. Correspondingly, in response to receiving the first information, the second device sends second information to the first device, where the second information is an ACK message for the first information. Then, the first device can switch to the RedCap communication module and wait for further scheduling by the second device (e.g., the first device is scheduled to a BWP associated with the RedCap communication module for communication).

Manner 2, the first device sends first information to the second device, to request to switch from the intelligent communication module to a RedCap communication module. Correspondingly, in response to receiving the first information, the second device sends second information to the first device as an ACK, where the second information is used for scheduling the first device to a BWP dedicated for the RedCap communication module. Then, the second device switches to the RedCap communication module and performs related operations based on the second information.

Manner 3, the first device switches from the intelligent communication module to a RedCap communication module first, and then sends first information (also referred to as "scheduling request message") on a BWP dedicated for the RedCap communication module, to request the second device to schedule the BWP dedicated for the RedCap communication module for the first device. Correspondingly, in response to receiving the first information, the second device sends second information to the first device, where the second information is used for scheduling the BWP dedicated for the RedCap communication module for the first device. Subsequently, in response to receiving the second information, the first device can perform related operations based on the second information.

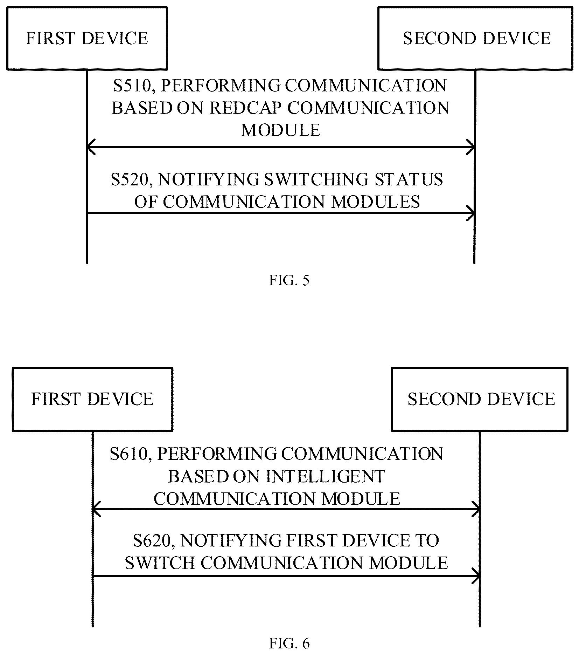

Example 2: FIG. 5 is a schematic flowchart illustrating a method for wireless communication provided in embodiments of the present disclosure. The method illustrated in FIG. 5 can include operations at S510 to S520.

At S510, a first device communicates with a second device based on a RedCap communication module.

At S520, if the first device is ready to perform data transmission for a target service (e.g., a video call service) and the target service is associated with an intelligent communication module, the first device can notify the second device of a switching status of communication modules inside the first device.

By way of example, the following describes a manner for the first device to notify the second device in combination with Manner 1 to Manner 3. It may be noted that, in embodiments of the present disclosure, the manner of notifying the second device is not limited to the following three manners.

Manner 1, the first device sends first information to the second device, to request to switch from the RedCap communication module to the intelligent communication module. Correspondingly, in response to receiving the first information, the second device sends second information to the first device, where the second information is an ACK message for the first information. Then, the first device can switch to the intelligent communication module and wait for further scheduling by the second device (e.g., the first device is scheduled to a BWP associated with the intelligent communication module for communication).

Manner 2, the first device switches from the RedCap communication module to the intelligent communication module first, and then sends first information to the second device, to notify the second device of a switching from the RedCap communication module to the intelligent communication module. Correspondingly, the second device can confirm, based on the first information, that the first device has switched from the RedCap communication module to the intelligent communication module.

Manner 3, the first device switches from the RedCap communication module to the intelligent communication module first, and then sends a scheduling request on a BWP dedicated for a non-RedCap communication module, to request the second device to schedule the first device to a BWP associated with the intelligent communication module. Correspondingly, in response to receiving the first information, the second device sends second information to the first device, where the second information is used for scheduling the BWP associated with the intelligent communication module for the first device. Subsequently, in response to receiving the second information, the first device can perform related operations based on the second information.

Manner 4, the first device switches from the RedCap communication module to the intelligent communication module first, and then sends a scheduling request (i.e., first information) on a BWP dedicated for a non-RedCap communication module, to request the second device to schedule the first device to a BWP associated with the intelligent communication module. The scheduling request may carry indication information indicating a switching between the communication modules. Correspondingly, in response to receiving the first information, the second device sends second information to the first device, where the second information is used for scheduling the BWP associated with the intelligent communication module. Subsequently, in response to receiving the second information, the first device can perform related operations based on the second information.

### Embodiment 2

In some embodiments, the first information can indicate, in an explicit manner, that the first device is to perform communication based on the target communication module. In other words, the first information indicates that the first device is to perform communication based on the target communication module. In some embodiments, the first information may be understood as a notification message for notifying that the first device is to communicate with the second device based on the target communication module. For example, the first information may carry indication information, and the indication information indicates, in the explicit manner, that the first device is to perform communication based on the target communication module.

In embodiments of the present disclosure, there is no limitation on a manner of carrying the first information. For example, the first information may be carried in one or more of an RRC message, an MAC CE, or PHY signaling.

In some other embodiments, the first information can indicate, in an implicit manner, that the first device is to switch to the target communication module. For example, the implicit manner means that the second device can indicate that the first device is to switch to the target communication module by scheduling, via the second information, the first device to a target wireless resource associated with the target communication module for communication.

In embodiments of the present disclosure, the target radio resource is not specifically limited. In some embodiments, the target radio resource may be a frequency-domain resource. For example, the target radio resource may include a target bandwidth. For another example, the target radio resource may include a target BWP. In some other embodiments, the target radio resource may be a time-domain resource or a code-domain resource.

Taking the target wireless resource being the target bandwidth as an example, the target bandwidth associated with the target communication module can be replaced with the target bandwidth corresponding to the target communication module. In some embodiments, the target bandwidth may be a bandwidth dedicated for the target communication module. Taking the target bandwidth being the target BWP as an example, the target bandwidth may be a BWP dedicated for the target communication module. Certainly, in embodiments of the present disclosure, the target bandwidth may also be a bandwidth that can be used by the target communication module but not the bandwidth dedicated for the target communication module. In other words, the target bandwidth may also have other usages.

Certainly, in embodiments of the present disclosure, the first information may also indicate, in other implicit manners, that the first device is to switch to the target communication module. In some embodiments, the second device can indicate that the first device is to switch from the target communication module to another communication module by the first information being sent to the first device to schedule the first device away from the target bandwidth associated with the target communication module.

In embodiments of the present disclosure, there is no limitation on an association manner between a communication module(s) and a wireless resource(s). In some embodiments, a different communication module among the multiple communication modules may correspond to a different wireless resource. In some other embodiments, a certain communication module among the multiple communication modules may correspond to a dedicated wireless resource, and another communication module may correspond to another wireless resource other than the dedicated wireless resource. For example, only a RedCap communication module can correspond to a dedicated BWP, and another communication module other than the RedCap communication module can correspond to another BWP other than the dedicated BWP. In other words, other communication modules may not respectively have dedicated BWPs.

In some embodiments, the method further includes the following. In response to receiving the first information, the first device can communicate with the second device based on the target communication module on the target wireless resource. Certainly, in embodiments of the present disclosure, the first device can communicate with other devices using the target communication module on the target wireless resource.

For ease of understanding, the method for wireless communication provided in embodiments of the present disclosure is described below in conjunction with Example 3 and Example 4. Example 3 and Example 4 are described with an example that the first communication module is an intelligent communication module and the second communication module is a RedCap communication module.

Example 3: FIG. 6 is a schematic flowchart illustrating a method for wireless communication provided in embodiments of the present disclosure. The method illustrated in FIG. 6 can include operations at S610 to S620.

At S610, a first device communicates with a second device based on an intelligent communication module.

For example, a call is in progress between the first device and the second device, and a current service is a service (e.g., online video) suitable for an intelligent communication unit. In this case, the first device is using the intelligent communication module.

At S620, if the first device switches from an online video service to a web browsing service, the second device can notify the first device to switch the communication module.

For example, if the first device switches from the online video service to the web browsing service and the first device browses webs for a relatively long time, the traffic between the first device and the second device is greatly reduced. In this case, the second device can notify the first device to switch the communication module.

By way of example, the following describes a manner for the second device to notify the first device in combination with Manner 1 to Manner 2. It may be noted that, in embodiments of the present disclosure, the manner of notifying the first device is not limited to the following two manners.

Manner 1, the second device sends first information to the first device, to notify that the first device is to switch from the intelligent communication module to a RedCap communication module. Correspondingly, in response to receiving the first information, the first device switches to the RedCap communication module and sends an ACK message to the second device. The ACK message indicates that the switching to the RedCap communication module has been completed, or in other words, the ACK message indicates that the switching to the RedCap communication module has been confirmed. Therefore, the ACK message can also be referred to as "confirmation message". The first information may be transmitted via one or more of an RRC message, an MAC CE, or PHY signaling.

Manner 2, the second device sends first information to the first device, to schedule the first device to a BWP dedicated for the RedCap communication module. Then, the first device switches to the RedCap communication module and performs related operations based on the second information. Correspondingly, after the second device receives information (e.g., service data) sent by the first device on the dedicated BWP, the second device can confirm that the first device has completed the switching to the communication module.

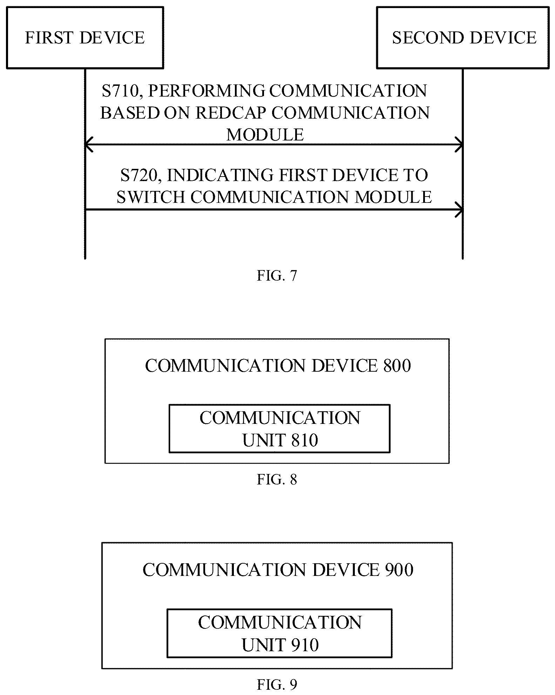

Example 4: FIG. 7 is a schematic flowchart illustrating a method for wireless communication provided in embodiments of the present disclosure. The method illustrated in FIG. 7 can include operations at S710 to S720.

At S710, a first device communicates with a second device based on a RedCap communication module.

For example, a current service of the first device is a service (e.g., web browsing) suitable for the RedCap communication module. In this case, the first device is using the RedCap communication module.

At S720, if the first device switches from a web browsing service to an online video service, the second device can indicate the first device to switch the communication module.

By way of example, the following describes a manner for the second device to notify the first device in combination with Manner 1 to Manner 3. It may be noted that, in embodiments of the present disclosure, the manner of notifying the first device is not limited to the following three manners.

Manner 1: the second device sends first information to the first device, notifying that the first device is to switch from the RedCap communication module to the intelligent communication module. Correspondingly, in response to receiving the first information, the first device switches to the intelligent communication module and sends an ACK message to the second device. The ACK message indicates that the switching to the intelligent communication module has been completed, or in other words, the ACK message indicates that the switching to the intelligent communication module has been confirmed. Therefore, the ACK message can also be referred to as "confirmation message". The first information may be transmitted via one or more of an RRC message, an MAC CE, or PHY signaling.

Manner 2, the second device sends first information to the first device, to schedule the first device from a dedicated BWP corresponding to the RedCap communication module to another BWP corresponding to the intelligent communication module. In response to receiving the first information, the first device switches from the RedCap communication module to the intelligent communication module. Subsequently, the first device sends information (e.g., service data, etc.,) to the second device based on the intelligent communication module on another BWP. Correspondingly, after receiving the information on another BWP, the second device can confirm that the first device has switched from the RedCap communication module to the intelligent communication module.

Manner 3, the second device sends first information to the first device, to schedule the first device from a dedicated BWP corresponding to the RedCap communication module to another BWP corresponding to the intelligent communication module. The first information carries indication information, and the indication information indicates that the first device is to switch from the RedCap communication module to the intelligent communication module. In response to receiving the first information, the first device switches from the RedCap communication module to the intelligent communication module. Subsequently, the first device sends, according to the first information, information (e.g., service data, etc.,) to the second device based on the intelligent communication module on another BWP. Correspondingly, after receiving the information on another BWP, the second device can confirm that the first device has switched from the RedCap communication module to the intelligent communication module.

The method embodiments of the present disclosure are described in detail above with reference to FIG. 1 to FIG. 7, and the apparatus embodiments of the present disclosure will be described in detail below with reference to FIG. 8 to FIG. 10. It may be understood that, illustrations of method embodiments and illustrations of apparatus embodiments correspond to each other, and therefore, for parts not described in detail, reference may be made to the foregoing method embodiments.

FIG. 8 is a schematic diagram of a communication device provided in embodiments of the present disclosure. The communication device 800 illustrated in FIG. 8 is a first device, and he communication device 800 includes a communication unit 810. The communication unit 810 is configured to receive or send first information, where the first information indicates that the first device is to perform communication based on a target communication module among multiple communication modules, and the multiple communication modules respectively have different communication capabilities and/or power consumption.

In some embodiments, the communication capabilities indicate whether the first device supports broadband communication services, and/or the communication capabilities indicate whether the first device supports narrowband communication services.

In some embodiments, an indication manner of the first information indicating that the first device is to perform communication based on the target communication module includes an explicit indication or an implicit indication.

In some embodiments, the multiple communication modules include a first communication module and a second communication module, where the first information indicates that the first device is to switch from the first communication module to the second communication module, or the first information indicates that the first device is to switch from the second communication module to the first communication module.

In some embodiments, when the indication manner of the first information is the explicit indication, the first information is carried in one or more of an RRC message, an MAC CE, or PHY signaling.

In some embodiments, when a receiving end of the first information is the first device and the indication manner of the first information is the implicit manner, the first information is a scheduling command or the first information is carried in a scheduling command. The scheduling command is used for scheduling the first device to a target BWP for communication, and the target BWP is associated with the target communication module.

In some embodiments, when a sending end of the first information is the first device and the indication manner of the first information is the implicit manner, the first information is a scheduling request message, the scheduling request is sent in the target BWP and is used for requesting to schedule the first device to the target BWP for communication, and the target BWP is associated with the target communication module.

In some embodiments, the communication unit is further configured to, in response to the first device sending the first information, receive second information sent by the second device, where the second information is used for confirming that the first device is to switch to the target communication module for communication.

In some embodiments, the second information indicates, in the explicit manner, that the first device is to switch to the target communication module, or the second information indicates, in the implicit manner, that the first device is to switch to the target communication module.

In some embodiments, the implicit manner means that the second information indicates that the first device is to switch to the target communication module by the first device being scheduled to the target BWP for communication, where the target BWP is associated with the target communication module.

In some embodiments, when an indication manner of the second information is an explicit indication, the second information is carried in one or more of an RRC message, an MAC CE, or PHY signaling.

In some embodiments, a processing unit in the communication device is further configured to, in response to the first device receiving the second information, switch to the target communication module for communication.

In some embodiments, before the first device sends the first information, the processing unit in the communication device is configured to switch to the target communication module.

In some embodiments, the multiple communication modules include one or more of a RedCap communication module, an eMBB communication module, or an intelligent communication module.

FIG. 9 is a schematic diagram of a communication device provided in embodiments of the present disclosure. The communication device 900 illustrated in FIG. 9 is a second device, and the communication device 900 includes a communication unit 910. The communication unit 910 is configured to receive or send first information, where the first information indicates that a first device is to perform communication based on a target communication module among multiple communication modules, and the multiple communication modules respectively have different communication capabilities and/or power consumption.

In some embodiments, the communication capabilities indicate whether the first device supports broadband communication services, and/or the communication capabilities indicate whether the first device supports narrowband communication services.

In some embodiments, an indication manner of the first information indicating that the first device is to perform communication based on the target communication module includes an explicit indication or an implicit indication.

In some embodiments, the multiple communication modules include a first communication module and a second communication module, where the first information indicates that the first device is to switch from the first communication module to the second communication module, or the first information indicates that the first device is to switch from the second communication module to the first communication module.

In some embodiments, when the indication manner of the first information is the explicit indication, the first information is carried in one or more of an RRC message, an MAC CE, or PHY signaling.

In some embodiments, when a receiving end of the first information is the first device and the indication manner of the first information is the implicit manner, the first information is a scheduling command or the first information is carried in a scheduling command. The scheduling command is used for scheduling the first device to a target BWP for communication, and the target BWP is associated with the target communication module.

In some embodiments, when a sending end of the first information is the first device and the indication manner of the first information is the implicit manner, the first information is a scheduling request message, the scheduling request is sent in the target BWP and is used for requesting to schedule the first device to the target BWP for communication, and the target BWP is associated with the target communication module.

In some embodiments, the communication unit is further configured to, in response to the second device receiving the first information, send second information to the first device, where the second information is used for confirming that the first device is to switch to the target communication module for communication.

In some embodiments, the second information indicates, in the explicit manner, that the first device is to switch to the target communication module, or the second information indicates, in the implicit manner, that the first device is to switch to the target communication module.

In some embodiments, the implicit manner means that the second information indicates that the first device is to switch to the target communication module by the first device being scheduled to the target BWP for communication, where the target BWP is associated with the target communication module.

In some embodiments, when an indication manner of the second information is an explicit indication, the second information is carried in one or more of an RRC message, an MAC CE, or PHY signaling.

In some embodiments, the multiple communication modules include one or more of a RedCap communication module, an eMBB communication module, or an intelligent communication module.

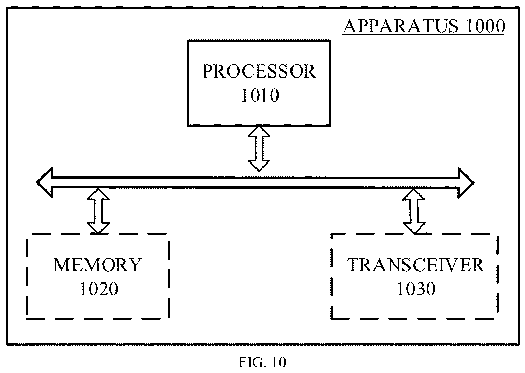

In an optional embodiment, the communication unit 810 may be a transceiver 1030. The communication device 900 may further include a transceiver 1030 and a memory 1020, as specifically illustrated in FIG. 10.

In an optional embodiment, the communication unit 910 may be a transceiver 1030. The communication device 900 may further include a transceiver 1030 and a memory 1020, as specifically illustrated in FIG. 10.

FIG. 10 is a schematic structural diagram of a communication apparatus provided in embodiments of the present disclosure. Dotted lines illustrated in FIG. 10 indicate that a unit or a module is optional. The apparatus 1000 can be configured to implement the method illustrated in the method embodiments. The apparatus 1000 may be a chip, a terminal device, or a network device.

The apparatus 1000 may include one or more processors 1010. The processor 1010 may support the apparatus 1000 to implement the method illustrated in the method embodiments. The processor 1010 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any conventional processor, etc.

The apparatus 1000 may further include one or more memories 1020. The memory 1020 is configured to store a program which, when executed by the processor 1010, causes the processor 1010 to perform the method illustrated in the method embodiments. The memory 1020 may be independent of the processor 1010 or may be integrated into the processor 1010.

The apparatus 1000 may further include a transceiver 1030. The processor 1010 may communicate with other devices or chips through the transceiver 1030. For example, the processor 1010 may send data to and receive data from other devices or chips through the transceiver 1030.

A computer-readable storage medium is further provided in embodiments of the present disclosure. The computer-readable storage medium is configured to store a program. The computer-readable storage medium is applicable to the terminal or the network device provided in embodiments of the present disclosure. The program causes a computer to perform the method performed by the terminal or the network device in various embodiments of the present disclosure.

A computer program product is further provided in embodiments of the present disclosure. The computer program product includes a program. The computer program product is applicable to the terminal or the network device provided in embodiments of the present disclosure. The program causes a computer to perform the method performed by the terminal or the network device in various embodiments of the present disclosure.

A computer program is further provided in embodiments of the present disclosure. The computer program is applicable to the terminal or the network device provided in embodiments of the present disclosure. The computer program causes a computer to perform the method performed by the terminal or the network device in various embodiments of the present disclosure.

It may be understood that, the terms "system" and "network" herein are usually used interchangeably throughout this disclosure. In addition, terms used in the present disclosure are merely intended for explaining embodiments of the present disclosure rather than limiting the present disclosure. The terms "first", "second", "third", "fourth", and the like used in the specification, the claims, and the accompanying drawings of the present disclosure are used to distinguish different objects rather than describe a particular order. In addition, the terms "include", "comprise", and "have" as well as variations thereof are intended to cover a non-exclusive inclusion.

In embodiments of the present disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the present disclosure, "B corresponding to A" indicates that B is associated with A, and B may be determined according to A. However, it may be further understood that, "determine B according to A" does not mean that B is determined according to A only, and B may also be determined according to A and/or other information.

In embodiments of the present disclosure, the term "correspondence" may mean that there is a direct or indirect correspondence between the two, may mean that there is an association between the two, may mean a relationship of indicating and indicated or configuring and configured, etc.

In embodiments of the present disclosure, "pre-defined" or "pre-configured" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, and a protocol applied to a future communication system, and the present disclosure is not limited in this regard.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the present disclosure, the magnitude of a sequence number of each of the foregoing processes does not mean an execution order, and an execution order of each process may be determined according to a function and an internal logic of the process, which shall not constitute any limitation to an embodiment process of embodiments of the present disclosure.

It will be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving or sending, by a first device, first information, wherein the first information indicates that the first device is to perform communication based on a target communication module among a plurality of communication modules, and the plurality of communication modules respectively have different communication capabilities and/or power consumption.

2. The method of claim 1, wherein the communication capabilities indicate whether the first device supports broadband communication services; and/or the communication capabilities indicate whether the first device supports narrowband communication services.

3. The method of claim 1 or 2, wherein an indication manner of the first information indicating that the first device is to perform communication based on the target communication module comprises an explicit indication or an implicit indication.

4. The method of any one of claims 1 to 3, wherein the plurality of communication modules comprise a first communication module and a second communication module, wherein the first information indicates that the first device is to switch from the first communication module to the second communication module, or the first information indicates that the first device is to switch from the second communication module to the first communication module.

5. The method of any one of claims 1 to 3, wherein when an indication manner of the first information is an explicit indication, the first information is carried in one or more of a radio resource control (RRC) message, a medium access control control element (MAC CE), or physical layer (PHY) signaling.

6. The method of any one of claims 1 to 4, wherein when a receiving end of the first information is the first device and an indication manner of the first information is an implicit manner, the first information is a scheduling command or the first information is carried in a scheduling command, wherein
the scheduling command is used for scheduling the first device to a target bandwidth part (BWP) for communication, and the target BWP is associated with the target communication module.

7. The method of any one of claims 1 to 4, wherein when a sending end of the first information is the first device and an indication manner of the first information is an implicit manner, the first information is a scheduling request message, the scheduling request is sent in a target BWP and is used for requesting to schedule the first device to the target BWP for communication, and the target BWP is associated with the target communication module.

8. The method of any one of claims 1 to 4, further comprising:
in response to the first device sending the first information, receiving, by the first device, second information sent by the second device, wherein the second information is used for confirming that the first device is to switch to the target communication module for communication.

9. The method of claim 7, wherein the second information indicates, in an explicit manner, that the first device is to switch to the target communication module, or the second information indicates, in an implicit manner, that the first device is to switch to the target communication module.

10. The method of claim 9, wherein the implicit manner comprises:
the second information indicating that the first device is to switch to the target communication module by the first device being scheduled to the target BWP for communication, wherein the target BWP is associated with the target communication module.

11. The method of claim 9, wherein when an indication manner of the second information is the explicit indication, the second information is carried in one or more of an RRC message, an MAC CE, or PHY signaling.

12. The method of any one of claims 8 to 11, further comprising:
in response to the first device receiving the second information, switching, by the first device, to the target communication module for communication.

13. The method of any one of claims 1 to 5, wherein before sending, by the first device, the first information, the method further comprises:
switching, by the first device, to the target communication module.

14. The method of any one of claims 1 to 13, wherein the plurality of communication modules comprise one or more of a reduced capability (RedCap) communication module, an enhanced mobile broadband (eMBB) communication module, or an intelligent communication module.

15. A method for wireless communication, comprising:
receiving or sending, by a second device, first information, wherein the first information indicates that a first device is to perform communication based on a target communication module among a plurality of communication modules, and the plurality of communication modules respectively have different communication capabilities and/or power consumption.

16. The method of claim 15, wherein the communication capabilities indicate whether the first device supports broadband communication services; and/or the communication capabilities indicate whether the first device supports narrowband communication services.

17. The method of claim 15 or 16, wherein an indication manner of the first information indicating that the first device is to perform communication based on the target communication module comprises an explicit indication or an implicit indication.

18. The method of any one of claims 15 to 17, wherein the plurality of communication modules comprise a first communication module and a second communication module, wherein the first information indicates that the first device is to switch from the first communication module to the second communication module, or the first information indicates that the first device is to switch from the second communication module to the first communication module.

19. The method of any one of claims 15 to 17, wherein when an indication manner of the first information is an explicit indication, the first information is carried in one or more of a radio resource control (RRC) message, a medium access control control element (MAC CE), or physical layer (PHY) signaling.

20. The method of any one of claims 15 to 18, wherein when a receiving end of the first information is the first device and an indication manner of the first information is an implicit manner, the first information is a scheduling command or the first information is carried in a scheduling command, wherein
the scheduling command is used for scheduling the first device to a target bandwidth part (BWP) for communication, and the target BWP is associated with the target communication module.

21. The method of any one of claims 15 to 18, wherein when a sending end of the first information is the first device and an indication manner of the first information is an implicit manner, the first information is a scheduling request message, the scheduling request message is sent in a target BWP, the scheduling request is used for requesting to schedule the first device to the target BWP for communication, and the target BWP is associated with the target communication module.

22. The method of any one of claims 15 to 18, further comprising:
in response to the second device receiving the first information, sending, by the second device, second information to the first device, wherein the second information is used for confirming that the first device is to switch to the target communication module for communication.

23. The method of claim 21, wherein the second information indicates, in an explicit manner, that the first device is to switch to the target communication module, or the second information indicates, in an implicit manner, that the first device is to switch to the target communication module.

24. The method of claim 23, wherein the implicit manner comprises:
the second information indicating that the first device is to switch to the target communication module by the first device being scheduled to the target BWP for communication.

25. The method of claim 23, wherein when an indication manner of the second information is the explicit indication, the second information is carried in one or more of an RRC message, an MAC CE, or PHY signaling.

26. The method of any one of claims 15 to 25, wherein the plurality of communication modules comprise one or more of a reduced capability (RedCap) communication module, an enhanced mobile broadband (eMBB) communication module, or an intelligent communication module.

27. A communication device, being a first device and comprising:
a communication unit configured to receive or send first information, wherein the first information indicates that the first device is to perform communication based on a target communication module among a plurality of communication modules, and the plurality of communication modules respectively have different communication capabilities and/or power consumption.

28. The communication device of claim 27, wherein the communication capabilities indicate whether the first device supports broadband communication services; and/or the communication capabilities indicate whether the first device supports narrowband communication services.

29. The communication device of claim 27 or 28, wherein an indication manner of the first information indicating that the first device is to perform communication based on the target communication module comprises an explicit indication or an implicit indication.

30. The communication device of any one of claims 27 to 29, wherein the plurality of communication modules comprise a first communication module and a second communication module, wherein the first information indicates that the first device is to switch from the first communication module to the second communication module, or the first information indicates that the first device is to switch from the second communication module to the first communication module.

31. The communication device of any one of claims 27 to 29, wherein when an indication manner of the first information is an explicit indication, the first information is carried in one or more of a radio resource control (RRC) message, a medium access control control element (MAC CE), or physical layer (PHY) signaling.

32. The communication device of any one of claims 27 to 30, wherein when a receiving end of the first information is the first device and an indication manner of the first information is an implicit manner, the first information is a scheduling command or the first information is carried in a scheduling command, wherein
the scheduling command is used for scheduling the first device to a target bandwidth part (BWP) for communication, and the target BWP is associated with the target communication module.

33. The communication device of any one of claims 27 to 30, wherein when a sending end of the first information is the first device and an indication manner of the first information is an implicit manner, the first information is a scheduling request message, the scheduling request message is sent in a target BWP, the scheduling request is used for requesting to schedule the first device to the target BWP for communication, and the target BWP is associated with the target communication module.

34. The communication device of any one of claims 27 to 30, wherein the communication unit is further configured to:
in response to the first device sending the first information, receive second information sent by the second device, wherein the second information is used for confirming that the first device is to switch to the target communication module for communication.

35. The communication device of claim 33, wherein the second information indicates, in an explicit manner, that the first device is to switch to the target communication module, or the second information indicates, in an implicit manner, that the first device is to switch to the target communication module.

36. The communication device of claim 35, wherein the implicit manner comprises:
the second information indicating that the first device is to switch to the target communication module by the first device being scheduled to the target BWP for communication, wherein the target BWP is associated with the target communication module.

37. The communication device of claim 35, wherein when an indication manner of the second information is the explicit indication, the second information is carried in one or more of an RRC message, an MAC CE, or PHY signaling.

38. The communication device of any one of claims 34 to 37, wherein a processing unit in the communication device is further configured to:
in response to the first device receiving the second information, switch to the target communication module for communication.

39. The communication device of any one of claims 27 to 31, wherein before sending, by the first device, the first information, a processing unit in the communication device is configured to switch to the target communication module.

40. The communication device of any one of claims 27 to 39, wherein the plurality of communication modules comprise one or more of a reduced capability (RedCap) communication module, an enhanced mobile broadband (eMBB) communication module, or an intelligent communication module.

41. A communication device, being a second device and comprising:
a communication unit configured to receive or send first information, wherein the first information indicates that a first device is to perform communication based on a target communication module among a plurality of communication modules, and the plurality of communication modules respectively have different communication capabilities and/or power consumption.

42. The communication device of claim 41, wherein the communication capabilities indicate whether the first device supports broadband communication services; and/or the communication capabilities indicate whether the first device supports narrowband communication services.

43. The communication device of claim 41 or 42, wherein an indication manner of the first information indicating that the first device is to perform communication based on the target communication module comprises an explicit indication or an implicit indication.

44. The communication device of any one of claims 41 to 43, wherein the plurality of communication modules comprise a first communication module and a second communication module, wherein the first information indicates that the first device is to switch from the first communication module to the second communication module, or the first information indicates that the first device is to switch from the second communication module to the first communication module.

45. The communication device of any one of claims 41 to 43, wherein when an indication manner of the first information is an explicit indication, the first information is carried in one or more of a radio resource control (RRC) message, a medium access control control element (MAC CE), or physical layer (PHY) signaling.

46. The communication device of any one of claims 41 to 44, wherein when a receiving end of the first information is the first device and an indication manner of the first information is an implicit manner, the first information is a scheduling command or the first information is carried in a scheduling command, wherein
the scheduling command is used for scheduling the first device to a target bandwidth part (BWP) for communication, and the target BWP is associated with the target communication module.

47. The communication device of any one of claims 41 to 44, wherein when a sending end of the first information is the first device and an indication manner of the first information is an implicit manner, the first information is a scheduling request message, the scheduling request message is sent in a target BWP, the scheduling request is used for requesting to schedule the first device to the target BWP for communication, and the target BWP is associated with the target communication module.

48. The communication device of any one of claims 41 to 44, wherein the communication unit is further configured to:
in response to the second device receiving the first information, send second information to the first device, wherein the second information is used for confirming that the first device is to switch to the target communication module for communication.

49. The communication device of claim 47, wherein the second information indicates, in an explicit manner, that the first device is to switch to the target communication module, or the second information indicates, in an implicit manner, that the first device is to switch to the target communication module.

50. The communication device of claim 49, wherein the implicit manner comprises:
the second information indicating that the first device is to switch to the target communication module by the first device being scheduled to the target BWP for communication.

51. The communication device of claim 49, wherein when an indication manner of the second information is the explicit indication, the second information is carried in one or more of an RRC message, an MAC CE, or PHY signaling.

52. The communication device of any one of claims 41 to 51, wherein the plurality of communication modules comprise one or more of a reduced capability (RedCap) communication module, an enhanced mobile broadband (eMBB) communication module, or an intelligent communication module.

53. A communication device, comprising:
a transceiver;
a memory configured to store a program; and
a processor configured to invoke the program stored in the memory and control the transceiver to receive or send signals, to cause the communication device to perform the method of any one of claims 1 to 26.

54. An apparatus, comprising:
a processor configured to invoke a program stored in a memory, to cause the apparatus to perform the method of any one of claims 1 to 26.

55. A chip, comprising:
a processor configured to invoke a program stored in a memory, to cause a device equipped with the chip to perform the method of any one of claims 1 to 26.

56. A computer-readable storage medium configured to store a program that causes a computer to perform the method of any one of claims 1 to 26.

57. A computer program product comprising a program that causes a computer to perform the method of any one of claims 1 to 26.

58. A computer program being operable with a computer to perform the method of any one of claims 1 to 26.
